# EUROPEAN PATENT APPLICATION

(11) **EP 4 185 062 A1**
(43) Date of publication of application: **24.05.2023**
(21) Application number: 22217107.6
(22) Date of filing: 29.10.2019
(51) Int. Cl.: H04W 74/08, H04W 28/06

(54) **MEDIUM ACCESS CONTROL (MAC) FORMAT FOR 2-PART RANDOM ACCESS PROCEDURE**

(30) Priority: 31.10.2018 US 201862753497 P; 13.02.2019 US 201962805158 P
(62) Divisional of application: 19879230.1
(71) Applicant: INTEL Corporation, Santa Clara, CA 95054 (US)
(72) Inventor: LIM, Seau S., Swindon, N1 4GU (GB); ZHANG, Yujian, Beijing, 100081 (CN); LEE, Anthony, San Diego, California, 92128 (US); HEO, Youn Hyoung, San Jose, California, 95134 (US); XIONG, Gang, Beaverton, Oregon, 97006 (US); PALAT, Sudeep K., Cheltenham Gloucestershire, GL51 0GG (GB)
(74) Representative: Goddar, Heinz J.

(57) **Abstract**

An apparatus of a user equipment (LTE) includes processing circuitry coupled to memory, where to configure the UE for a 2-step random access procedure with a base station, the processing circuitry is to encode a first message for transmission to the base station. The first message includes a random access preamble triggering the 2-step random access procedure and a payload. The payload includes a medium access control (MAC) protocol data unit (PDU) with multiplexed MAC service data units (SDUs). The MAC PDU includes a C-RNTI MAC CE identifying the UE. The processing circuitry is to decode a second message received from the base station in response to the first message, the second message including a random access response (RAR) MAC PDU with an uplink grant. The processing circuitry is to encode uplink data for transmission to the base station based on the uplink grant.

## Description

### PRIORITY CLAIM

This application claims the benefit of priority to the following provisional applications:

United States Provisional Patent Application Serial No. 62/753,497, filed October 31, 2018, and entitled "MEDIUM ACCESS CONTROL (MAC) FORMAT FOR MSGA AND MSGB IN 2-PART RANDOM ACCESS PROCEDURE"; and

United States Provisional Patent Application Serial No. 62/805,158, filed February 13, 2019, and entitled "MAC FORMAT FOR MSGA AND MSGB IN 2-STEP RA PROCEDURE."

Each provisional patent application identified above is incorporated herein by reference in its entirety.

### TECHNICAL FIELD

Aspects pertain to wireless communications. Some aspects relate to wireless networks including 3GPP (Third Generation Partnership Project) networks, 3GPP LTE (Long Term Evolution) networks, 3GPP LTE-A (LTE Advanced) networks, and fifth-generation (5G) networks including 5G new radio (NR) (or 5G-NR) networks and 5G-LTE networks such as 5G NR unlicensed spectrum (NR-U) networks. Other aspects are directed to systems and methods for medium access control (MAC) format for Message A (MSG A) and Message B (MSG B) in 2-part random access procedure.

### BACKGROUND

Mobile communications have evolved significantly from early voice systems to today's highly sophisticated integrated communication platform. With the increase in different types of devices communicating with various network devices, usage of 3GPP LTE systems has increased. The penetration of mobile devices (user equipment or UEs) in modern society has continued to drive demand for a wide variety of networked devices in a number of disparate environments. Fifth-generation (5G) wireless systems are forthcoming and are expected to enable even greater speed, connectivity, and usability. Next generation 5G networks (or NR networks) are expected to increase throughput, coverage, and robustness and reduce latency and operational and capital expenditures. 5G-NR networks will continue to evolve based on 3GPP LTE-Advanced with additional potential new radio access technologies (RATs) to enrich people's lives with seamless wireless connectivity solutions delivering fast, rich content and services. As current cellular network frequency is saturated, higher frequencies, such as millimeter wave (mmWave) frequency, can be beneficial due to their high bandwidth.

Potential LTE operation in the unlicensed spectrum includes (and is not limited to) the LTE operation in the unlicensed spectrum via dual connectivity (DC), or DC-based LAA, and the standalone LTE system in the unlicensed spectrum, according to which LTE-based technology solely operates in unlicensed spectrum without requiring an "anchor" in the licensed spectrum, called MulteFire. MulteFire combines the performance benefits of LTE technology with the simplicity of Wi-Fi-like deployments.

Further enhanced operation of LTE systems in the licensed as well as unlicensed spectrum is expected in future releases and 5G systems. Such enhanced operations can include techniques for MAC format for MSG A and MSG B in 2-part random access procedure.

### BRIEF DESCRIPTION OF THE FIGURES

In the figures, which are not necessarily drawn to scale, like numerals may describe similar components in different views. Like numerals having different letter suffixes may represent different instances of similar components. The figures illustrate generally, by way of example, but not by way of limitation, various aspects discussed in the present document.
FIG. 1A illustrates an architecture of a network, in accordance with some aspects.
FIG. 1B and FIG. 1C illustrate a non-roaming 5G system architecture in accordance with some aspects.
FIG. 2 illustrates a swimlane diagram of a 2-step random access procedure, in accordance with some aspects.
FIG. 3 illustrates a MAC PDU for MSG A of a 2-step random access procedure, in accordance with some aspects.
FIG. 4 illustrates another MAC PDU for MSG A of a 2-step random access procedure, in accordance with some aspects.
FIG. 5 illustrates an example of layer 1 (L1) multiplexing for MSG B of a 2-step random access procedure, in accordance with some aspects.
FIG. 6 illustrates a MAC PDU for MSG B of a 2-step random access procedure, in accordance with some aspects.
FIG. 7 illustrates MAC multiplexing for MSG B of a 2-step random access procedure, in accordance with some aspects.
FIG. 8 illustrates another MAC PDU for MSG B of a 2-step random access procedure, in accordance with some aspects.
FIG. 9 illustrates a block diagram of a communication device such as an evolved Node-B (eNB), a new generation Node-B (gNB), an access point (AP), a wireless station (STA), a mobile station (MS), or a user equipment (UE), in accordance with some aspects.

### DETAILED DESCRIPTION

The following description and the drawings sufficiently illustrate aspects to enable those skilled in the art to practice them. Other aspects may incorporate structural, logical, electrical, process, and other changes. Portions and features of some aspects may be included in or substituted for, those of other aspects. Aspects set forth in the claims encompass all available equivalents of those claims.

FIG. 1A illustrates an architecture of a network in accordance with some aspects. The network 140A is shown to include user equipment (UE) 101 and UE 102. The UEs 101 and 102 are illustrated as smartphones (e.g., handheld touchscreen mobile computing devices connectable to one or more cellular networks) but may also include any mobile or non-mobile computing device, such as Personal Data Assistants (PDAs), pagers, laptop computers, desktop computers, wireless handsets, drones, or any other computing device including a wired and/or wireless communications interface. The UEs 101 and 102 can be collectively referred to herein as LTE 101, and UE 101 can be used to perform one or more of the techniques disclosed herein.

Any of the radio links described herein (e.g., as used in the network 140A or any other illustrated network) may operate according to any exemplary radio communication technology and/or standard.

LTE and LTE-Advanced are standards for wireless communications of highspeed data for UE such as mobile telephones. In LTE-Advanced and various wireless systems, carrier aggregation is a technology according to which multiple carrier signals operating on different frequencies may be used to carry communications for a single UE, thus increasing the bandwidth available to a single device. In some aspects, carrier aggregation may be used where one or more component carriers operate on unlicensed frequencies.

Aspects described herein can be used in the context of any spectrum management scheme including, for example, dedicated licensed spectrum, unlicensed spectrum, (licensed) shared spectrum (such as Licensed Shared Access (LSA) in 2.3-2.4 GHz, 3.4-3.6 GHz, 3.6-3.8 GHz, and further frequencies and Spectrum Access System (SAS) in 3.55-3.7 GHz and further frequencies).

Aspects described herein can also be applied to different Single Carrier or OFDM flavors (CP-OFDM, SC-FDMA, SC-OFDM, filter bank-based multicarrier (FBMC), OFDMA, etc.) and in particular 3GPP NR (New Radio) by allocating the OFDM carrier data bit vectors to the corresponding symbol resources.

In some aspects, any of the UEs 101 and 102 can comprise an Internet-of Things (IoT) UE or a Cellular IoT (CIoT) UE, which can comprise a network access layer designed for low-power IoT applications utilizing short-lived UE connections. In some aspects, any of the UEs 101 and 102 can include a narrowband (NB) IoT UE (e.g., such as an enhanced NB-IoT (eNB-IoT) LTE and Further Enhanced (FeNB-IoT) LTE). An IoT LTE can utilize technologies such as machine-to-machine (M2M) or machine-type communications (MTC) for exchanging data with an MTC server or device via a public land mobile network (PLMN), Proximity-Based Service (ProSe) or device-to-device (D2D) communication, sensor networks, or IoT networks. The M2M or MTC exchange of data may be a machine-initiated exchange of data. An IoT network includes interconnecting IoT UEs, which may include uniquely identifiable embedded computing devices (within the Internet infrastructure), with short-lived connections. The IoT UEs may execute background applications (e.g., keep-alive messages, status updates, etc.) to facilitate the connections of the IoT network.

In some aspects, any of the UEs 101 and 102 can include enhanced MTC (eMTC) UEs or further enhanced MTC (FeMTC) UEs.

The UEs 101 and 102 may be configured to connect, e.g., communicatively couple, with a radio access network (RAN) 110. The RAN 110 may be, for example, an Evolved Universal Mobile Telecommunications System (UMTS) Terrestrial Radio Access Network (E-UTRAN), a NextGen RAN (NG RAN), or some other type of RAN. The UEs 101 and 102 utilize connections 103 and 104, respectively, each of which comprises a physical communications interface or layer (discussed in further detail below); in this example, the connections 103 and 104 are illustrated as an air interface to enable communicative coupling, and can be consistent with cellular communications protocols, such as a Global System for Mobile Communications (GSM) protocol, a code-division multiple access (CDMA) network protocol, a Push-to-Talk (PTT) protocol, a PTT over Cellular (POC) protocol, a Universal Mobile Telecommunications System (UMTS) protocol, a 3GPP Long Term Evolution (LTE) protocol, a fifth-generation (5G) protocol, a New Radio (NR) protocol, and the like.

In an aspect, the UEs 101 and 102 may further directly exchange communication data via a ProSe interface 105. The ProSe interface 105 may alternatively be referred to as a sidelink interface comprising one or more logical channels, including but not limited to a Physical Sidelink Control Channel (PSCCH), a Physical Sidelink Shared Channel (PSSCH), a Physical Sidelink Discovery Channel (PSDCH), and a Physical Sidelink Broadcast Channel (PSBCH).

The LTE 102 is shown to be configured to access an access point (AP) 106 via connection 107. The connection 107 can comprise a local wireless connection, such as, for example, a connection consistent with any IEEE 802.11 protocol, according to which the AP 106 can comprise a wireless fidelity (WiFi^{®}) router. In this example, the AP 106 is shown to be connected to the Internet without connecting to the core network of the wireless system (described in further detail below).

The RAN 110 can include one or more access nodes that enable the connections 103 and 104. These access nodes (ANs) can be referred to as base stations (BSs), NodeBs, evolved NodeBs (eNBs), Next Generation NodeBs (gNBs), RAN nodes, and the like, and can comprise ground stations (e.g., terrestrial access points) or satellite stations providing coverage within a geographic area (e.g., a cell). In some aspects, the communication nodes 111 and 112 can be transmission/reception points (TRPs). In instances when the communication nodes 111 and 112 are NodeBs (e.g., eNBs or gNBs), one or more TRPs can function within the communication cell of the NodeBs. The RAN 110 may include one or more RAN nodes for providing macrocells, e.g., macro RAN node 111, and one or more RAN nodes for providing femtocells or picocells (e.g., cells having smaller coverage areas, smaller user capacity, or higher bandwidth compared to macrocells), e.g., low power (LP) RAN node 112.

Any of the RAN nodes 111 and 112 can terminate the air interface protocol and can be the first point of contact for the UEs 101 and 102. In some aspects, any of the RAN nodes 111 and 112 can fulfill various logical functions for the RAN 110 including, but not limited to, radio network controller (RNC) functions such as radio bearer management, uplink and downlink dynamic radio resource management and data packet scheduling, and mobility management. In an example, any of the nodes 111 and/or 112 can be a new generation Node-B (gNB), an evolved node-B (eNB), or another type of RAN node.

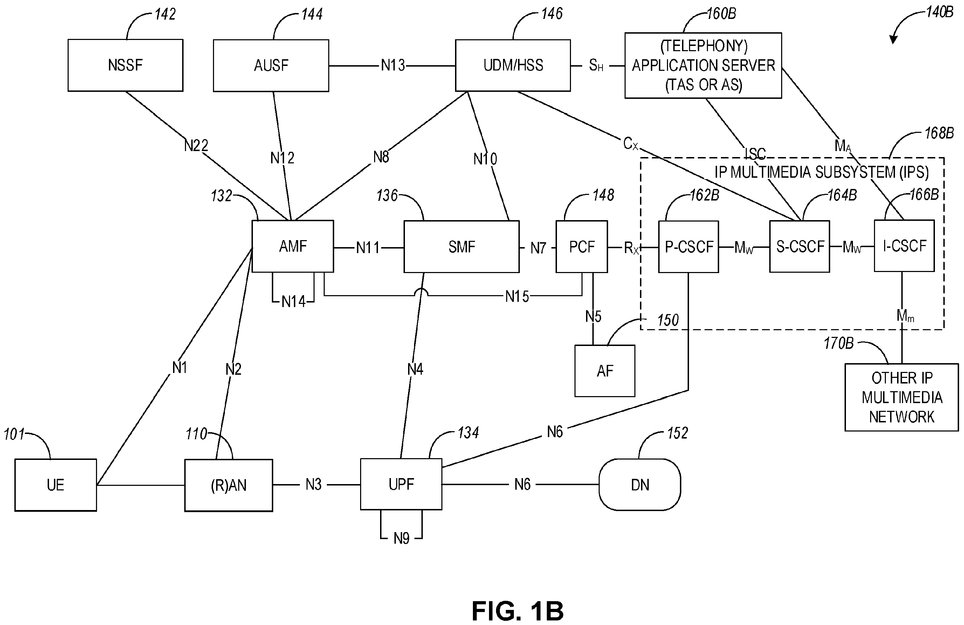

The RAN 110 is shown to be communicatively coupled to a core network (CN) 120 via an S1 interface 113. In aspects, the CN 120 may be an evolved packet core (EPC) network, a NextGen Packet Core (NPC) network, or some other type of CN (e.g., as illustrated in reference to FIGS. 1B-1I). In this aspect, the S1 interface 113 is split into two parts: the S1-U interface 114, which carries traffic data between the RAN nodes 111 and 112 and the serving gateway (S-GW) 122, and the S1-mobility management entity (MME) interface 115, which is a signaling interface between the RAN nodes 111 and 112 and MMEs 121.

In this aspect, the CN 120 comprises the MMEs 121, the S-GW 122, the Packet Data Network (PDN) Gateway (P-GW) 123, and a home subscriber server (HSS) 124. The MMEs 121 may be similar in function to the control plane of legacy Serving General Packet Radio Service (GPRS) Support Nodes (SGSN). The MMEs 121 may manage mobility aspects in access such as gateway selection and tracking area list management. The HSS 124 may comprise a database for network users, including subscription-related information to support the network entities' handling of communication sessions. The CN 120 may comprise one or several HSSs 124, depending on the number of mobile subscribers, on the capacity of the equipment, on the organization of the network, etc. For example, the HSS 124 can provide support for routing/roaming, authentication, authorization, naming/addressing resolution, location dependencies, etc.

The S-GW 122 may terminate the S1 interface 113 towards the RAN 110, and routes data packets between the RAN 110 and the CN 120. In addition, the S-GW 122 may be a local mobility anchor point for inter-RAN node handovers and also may provide an anchor for inter-3GPP mobility. Other responsibilities of the S-GW 122 may include a lawful intercept, charging, and some policy enforcement.

The P-GW 123 may terminate an SGi interface toward a PDN. The P-GW 123 may route data packets between the EPC network 120 and external networks such as a network including the application server 184 (alternatively referred to as application function (AF)) via an Internet Protocol (IP) interface 125. The P-GW 123 can also communicate data to other external networks 131A, which can include the Internet, IP multimedia subsystem (IPS) network, and other networks. Generally, the application server 184 may be an element offering applications that use IP bearer resources with the core network (e.g., UMTS Packet Services (PS) domain, LTE PS data services, etc.). In this aspect, the P-GW 123 is shown to be communicatively coupled to an application server 184 via an IP interface 125. The application server 184 can also be configured to support one or more communication services (e.g., Voice-over-Internet Protocol (VoIP) sessions, PTT sessions, group communication sessions, social networking services, etc.) for the UEs 101 and 102 via the CN 120.

The P-GW 123 may further be a node for policy enforcement and charging data collection. Policy and Charging Rules Function (PCRF) 126 is the policy and charging control element of the CN 120. In a non-roaming scenario, in some aspects, there may be a single PCRF in the Home Public Land Mobile Network (HPLMN) associated with a UE's Internet Protocol Connectivity Access Network (IP-CAN) session. In a roaming scenario with a local breakout of traffic, there may be two PCRFs associated with a UE's IP-CAN session: a Home PCRF (H-PCRF) within an HPLMN and a Visited PCRF (V-PCRF) within a Visited Public Land Mobile Network (VPLMN). The PCRF 126 may be communicatively coupled to the application server 184 via the P-GW 123.

In some aspects, the communication network 140A can be an IoT network or a 5G network, including 5G new radio network using communications in the licensed (5G NR) and the unlicensed (5G NR-U) spectrum. One of the current enablers of IoT is the narrowband-IoT (NB-IoT).

An NG system architecture can include the RAN 110 and a 5G network core (5GC) 120. The NG-RAN 110 can include a plurality of nodes, such as gNBs and NG-eNBs. The core network 120 (e.g., a 5G core network or 5GC) can include an access and mobility function (AMF) and/or a user plane function (UPF). The AMF and the UPF can be communicatively coupled to the gNBs and the NG-eNBs via NG interfaces. More specifically, in some aspects, the gNBs and the NG-eNBs can be connected to the AMF by NG-C interfaces, and to the UPF by NG-U interfaces. The gNBs and the NG-eNBs can be coupled to each other via Xn interfaces.

In some aspects, the NG system architecture can use reference points between various nodes as provided by 3GPP Technical Specification (TS) 23.501 (e.g., V15.4.0, 2018-12). In some aspects, each of the gNBs and the NG-eNBs can be implemented as a base station, a mobile edge server, a small cell, a home eNB, and so forth. In some aspects, a gNB can be a master node (MN) and NG-eNB can be a secondary node (SN) in a 5G architecture.

FIG. 1B illustrates a non-roaming 5G system architecture in accordance with some aspects. Referring to FIG. 1B, there is illustrated a 5G system architecture 140B in a reference point representation. More specifically, LTE 102 can be in communication with RAN 110 as well as one or more other 5G core (5GC) network entities. The 5G system architecture 140B includes a plurality of network functions (NFs), such as access and mobility management function (AMF) 132, session management function (SMF) 136, policy control function (PCF) 148, application function (AF) 150, user plane function (UPF) 134, network slice selection function (NSSF) 142, authentication server function (AUSF) 144, and unified data management (UDM)/home subscriber server (HSS) 146. The UPF 134 can provide a connection to a data network (DN) 152, which can include, for example, operator services, Internet access, or third-party services. The AMF 132 can be used to manage access control and mobility and can also include network slice selection functionality. The SMF 136 can be configured to set up and manage various sessions according to network policy. The UPF 134 can be deployed in one or more configurations according to the desired service type. The PCF 148 can be configured to provide a policy framework using network slicing, mobility management, and roaming (similar to PCRF in a 4G communication system). The UDM can be configured to store subscriber profiles and data (similar to an HSS in a 4G communication system).

In some aspects, the 5G system architecture 140B includes an IP multimedia subsystem (IMS) 168B as well as a plurality of IP multimedia core network subsystem entities, such as call session control functions (CSCFs). More specifically, the IMS 168B includes a CSCF, which can act as a proxy CSCF (P-CSCF) 162BE, a serving CSCF (S-CSCF) 164B, an emergency CSCF (E-CSCF) (not illustrated in FIG. 1B), or interrogating CSCF (I-CSCF) 166B. The P-CSCF 162B can be configured to be the first contact point for the LTE 102 within the IM subsystem (IMS) 168B. The S-CSCF 164B can be configured to handle the session states in the network, and the E-CSCF can be configured to handle certain aspects of emergency sessions such as routing an emergency request to the correct emergency center or PSAP. The I-CSCF 166B can be configured to function as the contact point within an operator's network for all IMS connections destined to a subscriber of that network operator, or a roaming subscriber currently located within that network operator's service area. In some aspects, the I-CSCF 166B can be connected to another IP multimedia network 170E, e.g. an IMS operated by a different network operator.

In some aspects, the UDM/HSS 146 can be coupled to an application server 160E, which can include a telephony application server (TAS) or another application server (AS). The AS 160B can be coupled to the IMS 168B via the S-CSCF 164B or the I-CSCF 166B.

A reference point representation shows that interaction can exist between corresponding NF services. For example, FIG. 1B illustrates the following reference points: N1 (between the UE 102 and the AMF 132), N2 (between the RAN 110 and the AMF 132), N3 (between the RAN 110 and the UPF 134), N4 (between the SMF 136 and the UPF 134), N5 (between the PCF 148 and the AF 150, not shown), N6 (between the UPF 134 and the DN 152), N7 (between the SMF 136 and the PCF 148, not shown), N8 (between the UDM 146 and the AMF 132, not shown), N9 (between two UPFs 134, not shown), N10 (between the UDM 146 and the SMF 136, not shown), N11 (between the AMF 132 and the SMF 136, not shown), N12 (between the AUSF 144 and the AMF 132, not shown), N13 (between the AUSF 144 and the UDM 146, not shown), N14 (between two AMFs 132, not shown), N15 (between the PCF 148 and the AMF 132 in case of a non-roaming scenario, or between the PCF 148 and a visited network and AMF 132 in case of a roaming scenario, not shown), N16 (between two SMFs, not shown), and N22 (between AMF 132 and NSSF 142, not shown). Other reference point representations not shown in FIG. 1E can also be used.

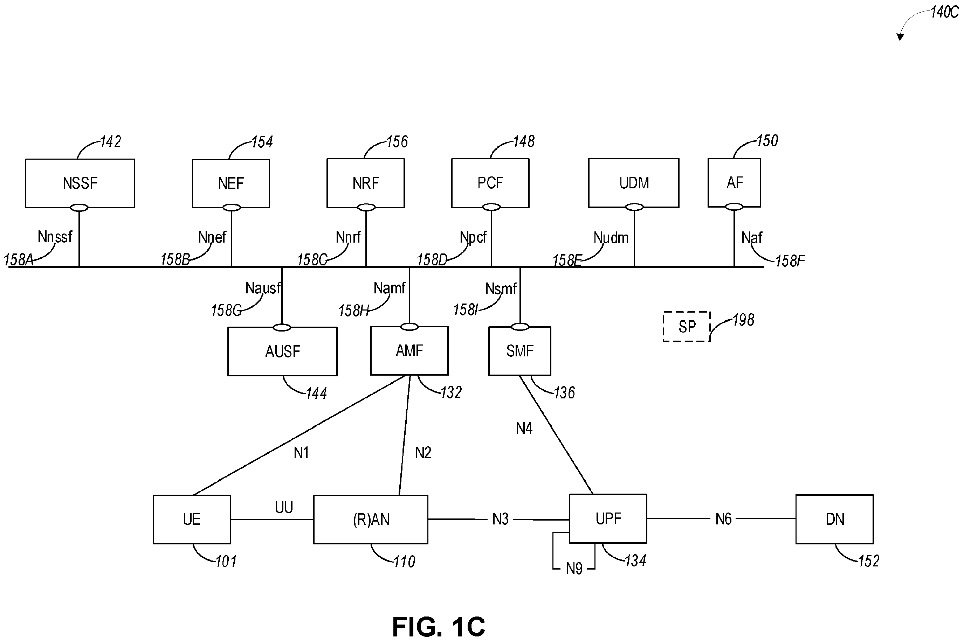

FIG. 1C illustrates a 5G system architecture 140C and a service-based representation. In addition to the network entities illustrated in FIG. 1B, system architecture 140C can also include a network exposure function (NEF) 154 and a network repository function (NRF) 156. In some aspects, 5G system architectures can be service-based and interaction between network functions can be represented by corresponding point-to-point reference points Ni or as service-based interfaces.

In some aspects, as illustrated in FIG. 1C, service-based representations can be used to represent network functions within the control plane that enable other authorized network functions to access their services. In this regard, 5G system architecture 140C can include the following service-based interfaces: Namf 158H (a service-based interface exhibited by the AMF 132), Nsmf 158I (a service-based interface exhibited by the SMF 136), Nnef 158B (a service-based interface exhibited by the NEF 154), Npcf 158D (a service-based interface exhibited by the PCF 148), a Nudm 158E (a service-based interface exhibited by the UDM 146), Naf 158F (a service-based interface exhibited by the AF 150), Nnrf 158C (a service-based interface exhibited by the NRF 156), Nnssf 158A (a service-based interface exhibited by the NSSF 142), Nausf 158G (a service-based interface exhibited by the AUSF 144). Other service-based interfaces (e.g., Nudr, N5g-eir, and Nudsf) not shown in FIG. 1C can also be used.

Rel-15 NR systems are designed to operate on the licensed spectrum. The NR-unlicensed (NR-U), a short-hand notation of the NR-based access to unlicensed spectrum, is a technology that enables the operation of NR systems on the unlicensed spectrum.

To reduce the impact of listen-before-talk (LBT) on random access procedure over an unlicensed carrier, the following two approaches may be used: reduce the number of message exchange between the UE and the base station (e.g., gNB) or increase the transmission (TX) opportunities of each random access procedure (RACH) step. The 2-step random access (RA) procedure uses the former approach. By reducing the number of RA steps, the number of LBTs is also reduced due to the reduced number of message exchanges between the UE and the gNB in the random access procedure.

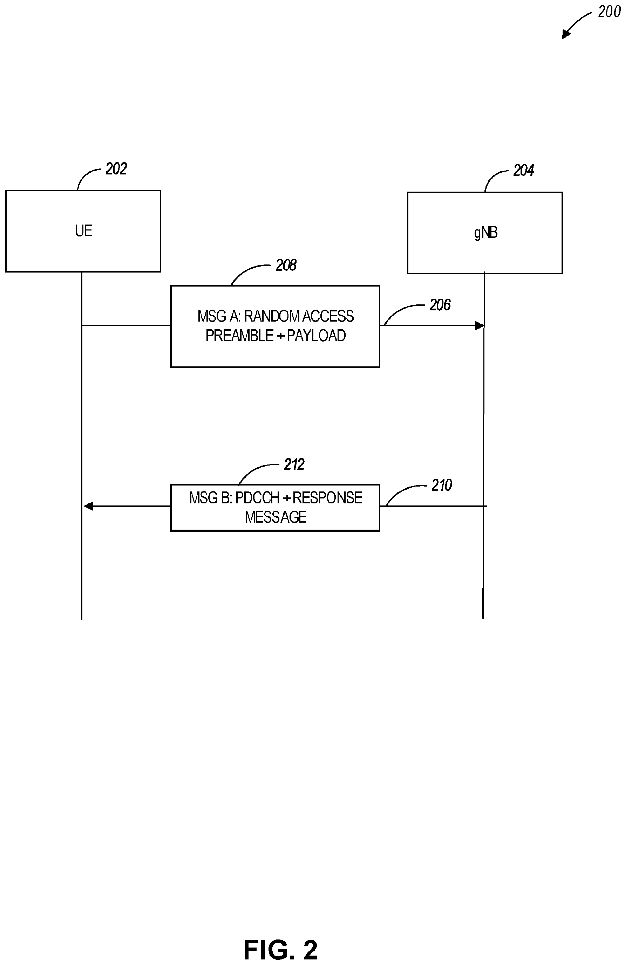

FIG. 2 illustrates a swimlane diagram 200 of a 2-step random access procedure, in accordance with some aspects. Referring to FIG. 2, the 2-step random access procedure takes place between a UE 202 and a gNB 204. At operation 206, the UE 202 communicates MSG A 208 to the gNB 204. MSG A 208 includes a random-access preamble and payload. Access preamble portion can be communicated via a physical random access channel PRACH), and payload portion may be communicated via a physical uplink shared channel (PUSCH).

In response to MSG A 208, the gNB 204 communicates MSG B 212 at operation 210. MSG B 212 includes physical downlink control channel (PDCCH) information and a response message which can be communicated via a physical downlink shared channel (PDSCH).

In MSG A 208, the PRACH preamble may be used as reference signals for coherent detection of payload transmitted as well as for time alignment if needed. The payload can be indicating the LTE ID for contention resolution in Step 2 (MSG B) and for LTE identification by the network in Step 1 (MSG A) in case of contention-based random access. In some aspects, the following triggers can be used to trigger the 2-step random access procedure illustrated in FIG. 2: initial access from RRC_IDLE; RRC Connection Re-establishment procedure; a handover; downlink (DL) or uplink (LTL) data arrival during RRC_CONNECTED when UL synchronisation status is "non-synchronised"; transition from RRC_INACTIVE; to establish time alignment at a secondary cell (SCell) addition; request for Other system information (SI) (Msg3-based); and beam failure recovery.

In some aspects, the MSG A payload can be configured to carry at least one of the following RRC messages, a MAC control element (CE), or a combination of both: an RRC Setup Request message, an RRC Resume Request message, an RRC Reestablishment Request message, and MAC CE (e.g., cell radio network temporary identifier (C-RNTI) MAC CE, a buffer status report (BSR), a power headroom report (PHR)).

In MSG B 212, the gNB 204 may include the preamble ID (random access preamble ID or RADPID) for identification and may also include the LTE ID for contention resolution in case of contention-based random access. In order to support the sending of the RRC Setup, Resume and Re-establishment messages, MSG B may be configured to also carry a payload for the RRC messages. Techniques disclosed herein can be used to configure the MAC format for MSG A 208 and MSG B 212.

MSG A payload format.

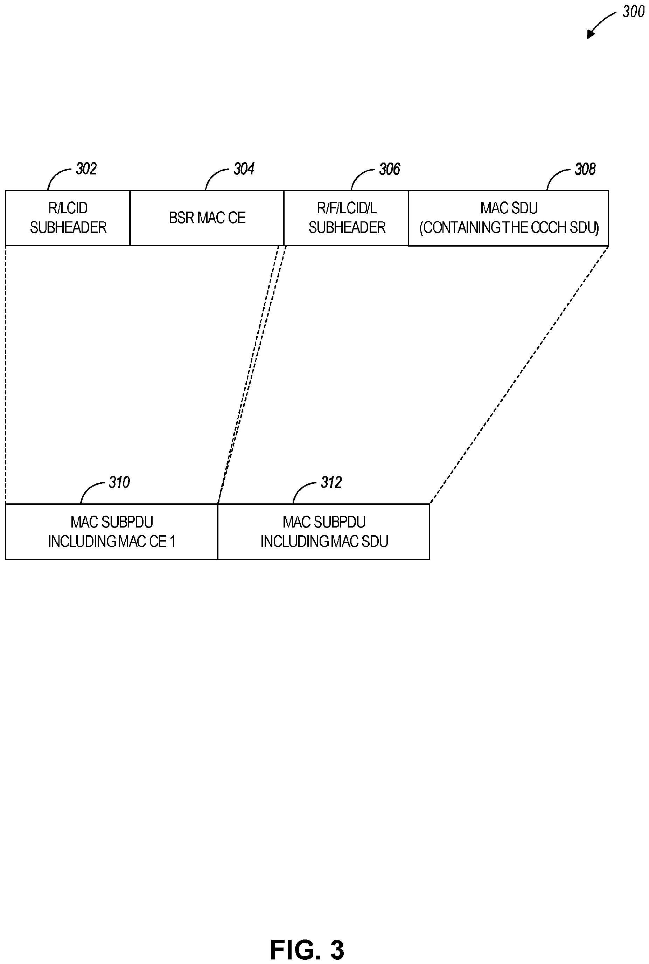

As illustrated in FIG. 1, for a 2-step random access procedure triggered by RRC, MSG A carries a payload containing an RRC message, a MAC CE, or both. The RRC message may be communicated over SRB0 as a common control channel (CCCH) service data unit (SDU). In this regard, the LTE MAC entity may include the MAC subheader to indicate that it is a CCCH SDU. Multiplexed together with the RRC message, the UE MAC entity may also include a BSR MAC control element (CE), as seen in FIG. 3.

FIG. 3 illustrates a MAC PDU 300 for MSG A of a 2-step random access procedure, in accordance with some aspects. Referring to FIG. 3, the MAC PDU 300 includes MAC subPDUs 310 and 312. The MAC subPDU 310 includes a subheader 302 and a BSR MAC CE 304. The MAC subPDU 312 includes a subheader 306 and a MAC SDU 308 (which can include CCCH SDU).

In some aspects, the MAC PDU can include more than one MAC SDU containing not just CCCH SDU but also SDUs originated from a dedicated control channel (DCCH) and a dedicated traffic channel (DTCH) from the UE.

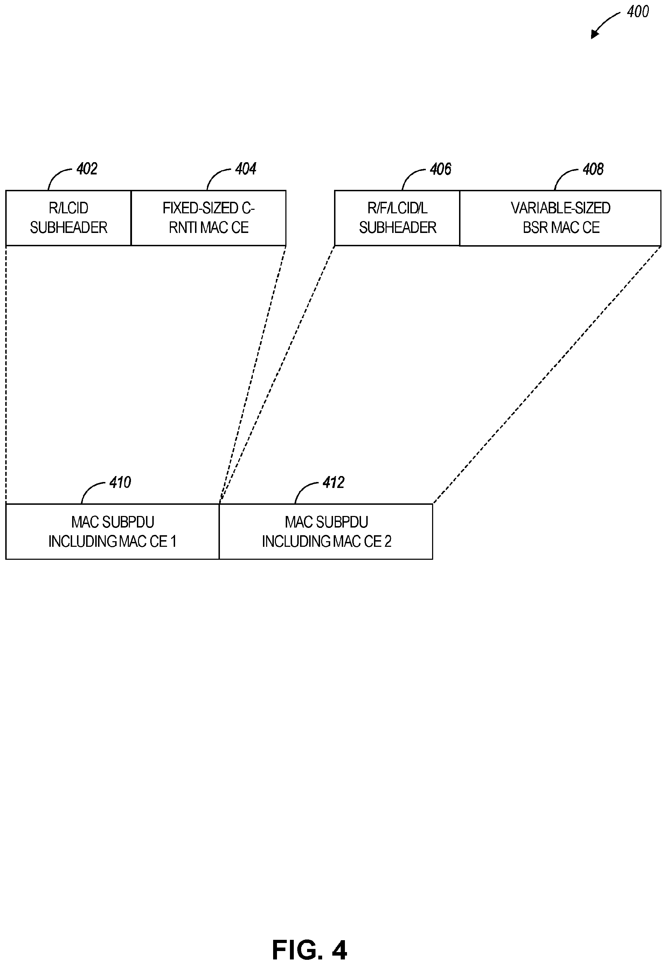

In some aspects where the 2-step random access is triggered by MAC (e.g., by a scheduling request (SR) trigger), the UE-ID is carried via a C-RNTI MAC CE. The SR trigger may be due to UL data arrival and hence it can also provide the BSR MAC CE. The MAC PDU for MSG A can be as illustrated in FIG. 4.

FIG. 4 illustrates another MAC PDU 400 for MSG A of a 2-step random access procedure, in accordance with some aspects. Referring to FIG. 4, the MAC PDU 400 includes MAC subPDUs 410 and 412. The MAC subPDU 410 includes a subheader 402 and a C-RNTI MAC CE 404. The MAC subPDU 412 includes a subheader 406 and a BSR MAC CE 408. In some aspects, the MAC PDU 400 can include other MAC CEs (e.g., PHR, etc.).

Reception of RA-RNTI in MSG B.

Single UE case.

In aspects when the LTE is transitioning from Inactive or Idle State to RRC Connected mode (i.e., during RRC Setup or Resume) and RRC re-establishment, the network has not assigned C-RNTI in these cases and can respond in the PDCCH with RA-RNTI associated with the RACH occasion. In aspects when the network can respond to only one UE at a time, the following are some possible MAC PDU formats for MSG B for these cases:
(1) In some aspects, existing MAC random access response (RAR) message (e.g., containing the RAPID, C-RNTI, LTL grant, and LTL timing advance value), a Contention Resolution Identifier MAC CE with corresponding MAC CE subheader (containing the part of the echo LTE ID in the RRC message), and MAC SDUs with corresponding MAC SDU subheaders (DL payload) can all be included in one MAC PDU.
(2) In some aspects, a new MAC CE (containing the C-RNTI, UL grant, UL timing advance value, and a Contention Resolution Identifier) with a corresponding MAC CE subheader and, MAC SDUs with corresponding MAC SDU subheaders (DL payload) can all be included in one MAC PDU.
(3) In some aspects, a new MAC RAR (containing the contents of the existing RAR and also include DL assignment for the Contention Resolution Identifier MAC CE and DL payload) forms a RAR MAC PDU, and the Contention Resolution Identifier MAC CE with corresponding MAC CE subheader and MAC SDUs with corresponding MAC SDU subheaders (DL payload) are sent separately in another MAC PDU.
(4) In some aspects, existing timing advance (TA) Command MAC CE with corresponding CE subheader and MAC SDU with corresponding MAC SDU subheader (DL payload) can all be included in one MAC PDU.

In some aspects, more than one MAC SDU containing not just CCCH and/or DCCH SDU but also SDUs originated from DTCH may be used in the multiplexed MAC PDU. For aspect (1) above, the order of arrival of the existing MAC RAR and the Contention Resolution Identifier may be fixed in the specification.

Multiple UE case.

In aspects when the network can respond to more than 1 UE at a time, the following are some possible MAC PDU formats for MSG B:
L1 mulitplexing case:
(1) In some aspects, one or more new MAC RAR (each new MAC RAR is responding to a UE and contains the contents of existing RAR and also include DL assignment for the ContentionResolutionIdentifier MAC CE and DL payload) form a RAR MAC PDU, and the Contention Resolution Identifier MAC CE plus MAC SDUs (DL payload) of each of the UEs are sent separately in another MAC PDU. A MAC PDU may be sent in L1 resources indicated in DL assignment.
(2) In some aspects, one or more new MAC CEs (each new MAC CE is responding to a UE and contains the C-RNTI, UL grant, UL timing advance value, ContentionResolutionIdentifier and DL assignment for the DL payload for the LTE) form a MAC PDU, and MAC SDUs (DL payload) of each of the UE corresponding to each MAC CE are sent separately in another MAC PDU. A MAC PDU may be sent in L1 resources indicated in DL assignment
(3) In some aspects, existing RARs are used to form existing RAR PDU and the Contention Resolution Identifier MAC CE and MAC SDUs (DL payload) are sent separately in another MAC PDU for each of the UEs. A MAC PDU may be sent in L1 resources indicated by their respective (temporary) C-RNTI PDCCH. The C-RNTI for the PDCCH of the MSG B payload can be the existing C-RNTI or the temporary C-RNTI from the RAR.

In some aspects, in case DL assignment is included in the new MAC CE, the DL assignment may include one or more following parameters: time and frequency resource allocation, modulation and coding scheme (MCS), Redundancy version, VRB-to-PRB mapping, HARQ process number, downlink assignment index, transmit power control (TPC) command for PUCCH transmission, PUCCH resource indicator, and PDSCH-to-HARQ_feedback timing indicator. Retransmission of MSG B MAC PDU may be scheduled by DL DCI with CRC scrambled by TC-RNTI or C-RNTI.

In some aspects, when DL assignment for scheduling MSG B MAC PDU is indicated in the DCI, a time window may be defined, where the starting slot and duration of the time window may be configured by SIB. Within the configured time window, UE would monitor PDCCH format 1_0 with common search space for scheduling of MSG B MAC PDU in PDSCH. The starting slot of the window may need to take into account UE processing delay.

In order to differentiate whether it is 2-step RACH or fallback to 4-step RACH, reserve bit (R-bit) in the RAR can be used to indicate whether the UE monitors a subsequent slot for the PDCCH and PDSCH of the MSG B payload or perform LTL transmission for Msg3 for the 4-step RACH using the UL grant in the RAR.

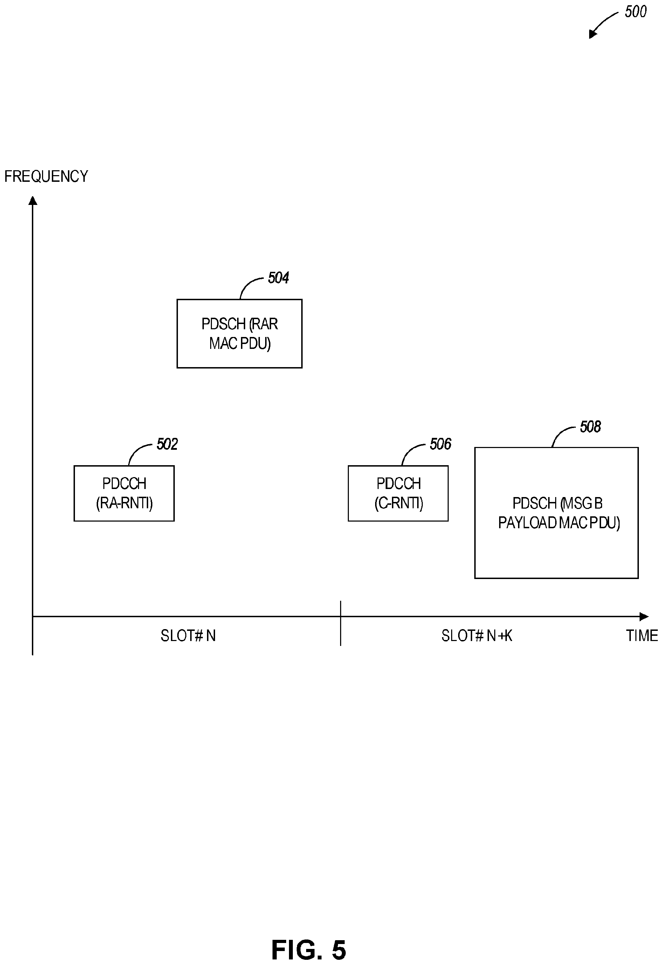

FIG. 5 illustrates an example of layer 1 (L1) multiplexing 500 for MSG B of a 2-step random access procedure, in accordance with some aspects.

Referring to FIG. 5, the PDSCH 504 containing the RAR MAC PDU is multiplexed with the PDSCH 508 containing the MAC PDU of the DL payload either in frequency and/or in time (e.g., the RAR MAC PDU is in K time slots while the MAC PDU of the DL payload is in a subsequent time slot). The corresponding PDCCH transmissions are referenced as 502 and 506 in FIG. 5.

In some aspects, more than one MAC SDUs containing not just CCCH and/or DCCH SDU but also SDUs originated from DTCH may be used in MSG B.

MAC multiplexing case:
(4) In some aspects, one or more MAC subPDU for MAC RAR and one or more MAC subPDU for MAC SDU may be used.

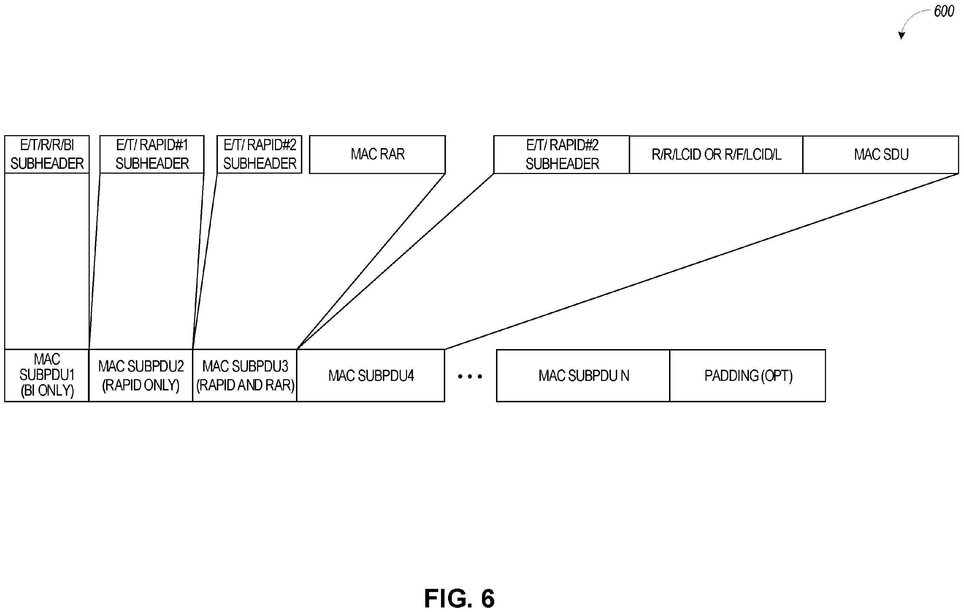

In this approach, the existing RAR PDU is extended to also handle MAC SDU from CCCH/DTCH/DCCH by allowing subheader of the same RAPID#2 to be sent. In order to allow the LTE to know whether it is a MAC RAR or MAC SDU, the leftmost subPDU of a RAPID may contain the MAC RAR while the subsequent subPDUs of the same RAPID contains the subheader of MAC SDU and its MAC SDU. There can be more than 2 MAC subPDUs with the same RAPID subheader (e.g. one for RAR, one for contention Resolution ID MAC CE and another for MAC SDU, etc.). An example of such MAC PDU is in FIG. 6. More specifically, FIG. 6 illustrates a MAC PDU 600 for MSG B of a 2-step random access procedure, in accordance with some aspects.

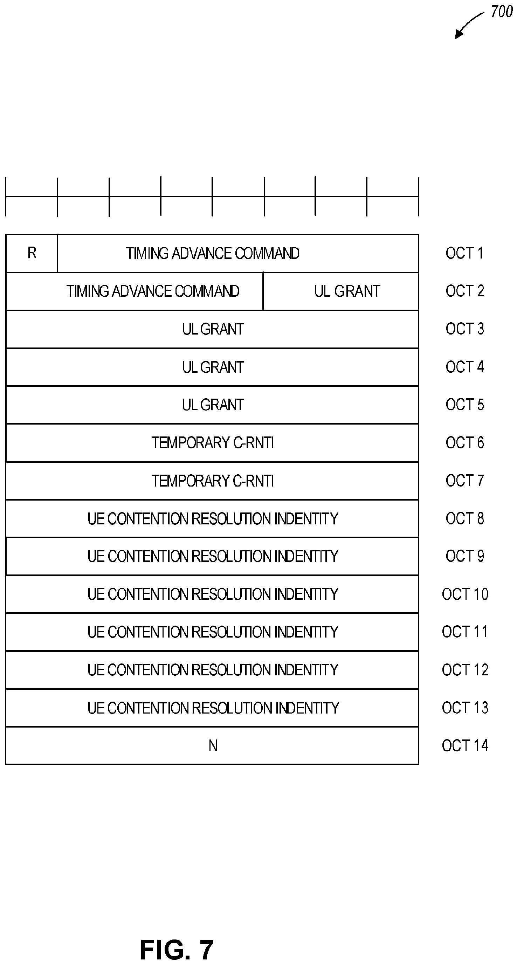

In some aspects, as another option of MAC multiplexing, only one RAR subheader is present for one UE, while MAC RAR is followed by MAC subPDUs containing MAC subheader as well as MAC SDU or MAC CE. The MAC RAR contains a field to indicate the boundary of the MAC subPDUs corresponding to the RAR subheader. For example, a field N illustrated in FIG. 7 can be used to indicate the number of subsequent MAC subPDUs belonging to the same UE. Another example is to use a field L to indicate the total length of the subsequent MAC subPDUs. The example of using field N in the MAC RAR 700 is shown in FIG. 7. In the MAC RAR 700, the first 7 octets are the same as NR Rel-15 MAC RAR format. Octets 8 to 13 are the UE Contention Resolution Identity, while Octet 14 is the field N to indicate the number of subsequent MAC subPDUs belonging to the same UE.

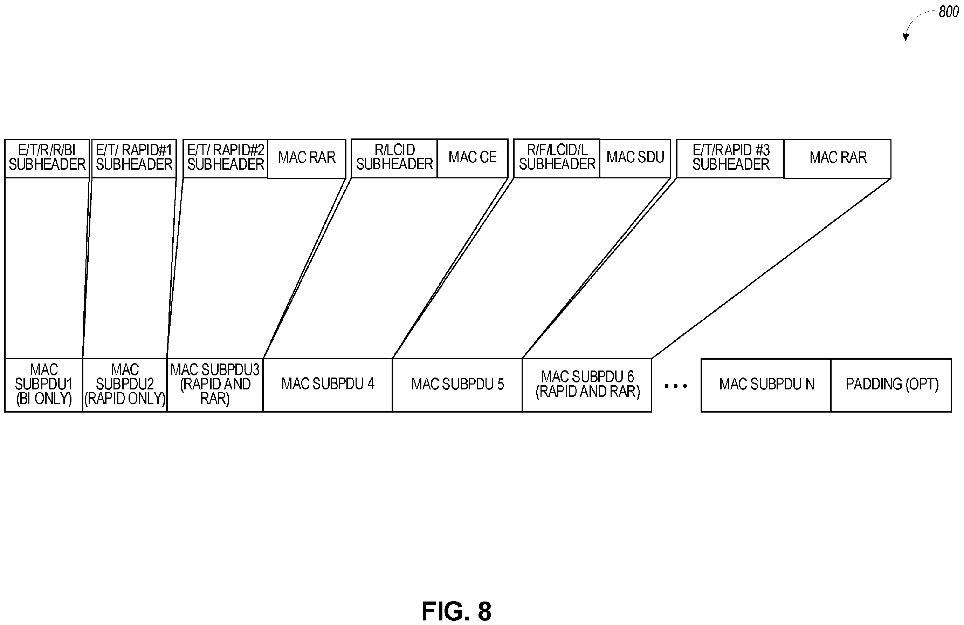

FIG. 8 illustrates another MAC PDU 800 for MSG B of a 2-step random access procedure, in accordance with some aspects. As illustrated in FIG. 8, MAC subPDU 3, MAC subPDU 4, and MAC subPDU 5 are addressed to the same UE. In MAC RAR of MAC subPDU 3, suppose field N as described above is used, then N is set to 2 in this example. UEs parsing MAC PDU can know that after MAC subPDU 4 and MAC subPDU 5, the next header format is RAR subheader with fields E/T/RAPID, as in MAC sub PDU 6.

Techniques disclosed herein can be used for providing new MAC CE format and MAC PDU structure for MSG A and MSG B

The claim of method 1, where a MAC SDU containing a CCCH/DCCH/DTCH message and/or BSR MAC CE and/or PHR MAC CE are multiplexed to form the MAC PDU for MSG A

The claim of method 1, where a C-RNTI MAC CE and/or BSR MAC CE and/or PHR MAC CE is multiplexed to form the MAC PDU for MSG A

The claim of method 1, where the existing MAC RAR (containing the RAPID, UL grant, C-RNTI and UL Timing Advance value) is MAC multiplexed with one or more MAC SDUs of a UE with each SDU containing payload originating from CCCH SDU or DCCH SDU or DTCH SDU in MSG B. In some aspects, a new MAC CE (containing the UL grant, LTL Timing Advance value, C-RNTI, and RAPID) is MAC multiplexed with one or more MAC SDUs of a UE with each SDU containing payload originating from CCCH SDU or DCCH SDU or DTCH SDU in MSG B. In some aspects, a new MAC RAR (containing the UL grant, UL Timing Advance value, C-RNTI, RAPID, and a DL assignment for the ContentionResolutionIdentifier MAC CE and DL payload) is used to form a RAR MAC PDU in MSG B. In some aspects, one or more new MAC RARs are multiplexed to form a RAR MAC PDU in MSG B. In some aspects, the DL assignment provides the radio resources for the DL payload which may contain the ContentionResolutionIdentifier MAC CE and DL payload of each of the UE are sent separately in another MAC PDU in MSG B.

In some aspects, a new MAC CE (containing the UL grant, UL Timing Advance value, C-RNTI, RAPID, and a DL assignment for the ContentionResolutionIdentifier MAC CE and DL payload) is used to form a RAR MAC PDU in MSG B.

In some aspects, the DL assignment is included in the new MAC CE or the new MAC RAR may include one or more following parameters: time and frequency resource allocation, modulation and coding scheme (MCS), Redundancy version, VRB-to-PRB mapping, HARQ process number, downlink assignment index, transmit power control (TPC) command for PUCCH transmission, and PUCCH resource indicator and PDSCH-to-HARQ feedback timing indicator.

In some aspects, the legacy RAR PDU is L1 multiplexed in time only, frequency only, or time and frequency with the MSG B payload which may contain the ContentionResolutionIdentifier MAC CE and DL payload of each of the UE are sent separately in another MAC PDU. In some aspects, MAC multiplexing is achieved via the legacy RAR PDU being extended to also include MAC SDU from CCCH/DTCH/DCCH by allowing RAR subheader of the same RAPID#2 to be sent. In some aspects, MAC multiplexing is achieved via only one RAR subheader is present for one UE, while MAC RAR is followed by MAC subPDUs containing MAC subheader as well as MAC SDU or MAC CE. In some aspects, multiple UEs can be multiplexed within the same RAR PDU.

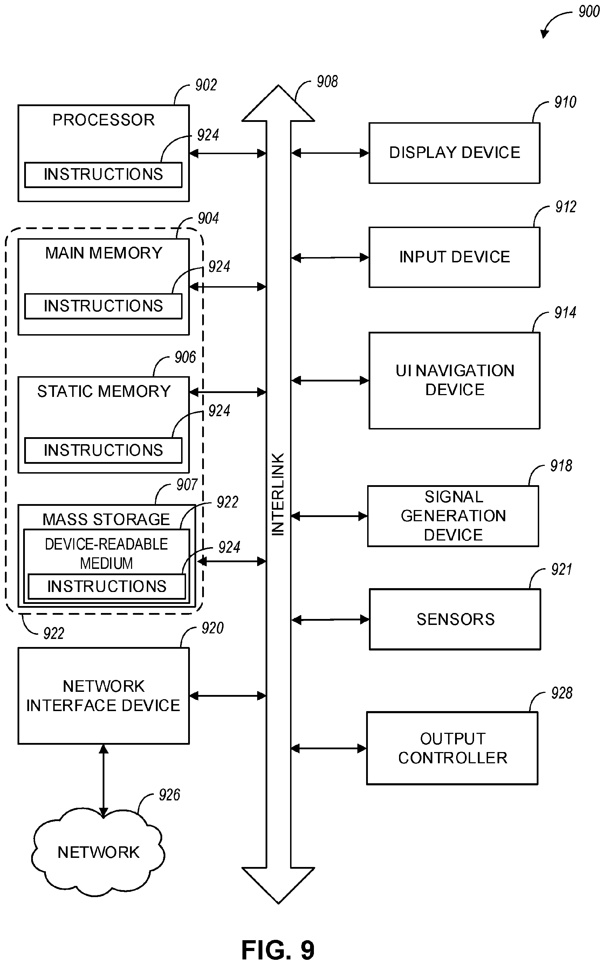

FIG. 9 illustrates a block diagram of a communication device such as an evolved Node-B (eNB), a next generation Node-B (gNB), an access point (AP), a wireless station (STA), a mobile station (MS), or a user equipment (UE), in accordance with some aspects and to perform one or more of the techniques disclosed herein. In alternative aspects, the communication device 900 may operate as a standalone device or may be connected (e.g., networked) to other communication devices.

Circuitry (e.g., processing circuitry) is a collection of circuits implemented in tangible entities of the device 900 that include hardware (e.g., simple circuits, gates, logic, etc.). Circuitry membership may be flexible over time. Circuitries include members that may, alone or in combination, perform specified operations when operating. In an example, the hardware of the circuitry may be immutably designed to carry out a specific operation (e.g., hardwired). In an example, the hardware of the circuitry may include variably connected physical components (e.g., execution units, transistors, simple circuits, etc.) including a machine-readable medium physically modified (e.g., magnetically, electrically, moveable placement of invariant massed particles, etc.) to encode instructions of the specific operation.

In connecting the physical components, the underlying electrical properties of a hardware constituent are changed, for example, from an insulator to a conductor or vice versa. The instructions enable embedded hardware (e.g., the execution units or a loading mechanism) to create members of the circuitry in hardware via the variable connections to carry out portions of the specific operation when in operation. Accordingly, in an example, the machine-readable medium elements are part of the circuitry or are communicatively coupled to the other components of the circuitry when the device is operating. In an example, any of the physical components may be used in more than one member of more than one circuitry. For example, under operation, execution units may be used in a first circuit of a first circuitry at one point in time and reused by a second circuit in the first circuitry, or by a third circuit in a second circuitry at a different time. Additional examples of these components with respect to the device 900 follow.

In some aspects, the device 900 may operate as a standalone device or may be connected (e.g., networked) to other devices. In a networked deployment, the communication device 900 may operate in the capacity of a server communication device, a client communication device, or both in server-client network environments. In an example, the communication device 900 may act as a peer communication device in peer-to-peer (P2P) (or other distributed) network environment. The communication device 900 may be a UE, eNB, PC, a tablet PC, a STB, a PDA, a mobile telephone, a smartphone, a web appliance, a network router, switch or bridge, or any communication device capable of executing instructions (sequential or otherwise) that specify actions to be taken by that communication device. Further, while only a single communication device is illustrated, the term "communication device" shall also be taken to include any collection of communication devices that individually or j ointly execute a set (or multiple sets) of instructions to perform any one or more of the methodologies discussed herein, such as cloud computing, software as a service (SaaS), and other computer cluster configurations.

Examples, as described herein, may include, or may operate on, logic or a number of components, modules, or mechanisms. Modules are tangible entities (e.g., hardware) capable of performing specified operations and may be configured or arranged in a certain manner. In an example, circuits may be arranged (e.g., internally or with respect to external entities such as other circuits) in a specified manner as a module. In an example, the whole or part of one or more computer systems (e.g., a standalone, client or server computer system) or one or more hardware processors may be configured by firmware or software (e.g., instructions, an application portion, or an application) as a module that operates to perform specified operations. In an example, the software may reside on a communication device-readable medium. In an example, the software, when executed by the underlying hardware of the module, causes the hardware to perform the specified operations.

Accordingly, the term "module" is understood to encompass a tangible entity, be that an entity that is physically constructed, specifically configured (e.g., hardwired), or temporarily (e.g., transitorily) configured (e.g., programmed) to operate in a specified manner or to perform part or all of any operation described herein. Considering examples in which modules are temporarily configured, each of the modules need not be instantiated at any one moment in time. For example, where the modules comprise a general-purpose hardware processor configured using the software, the general-purpose hardware processor may be configured as respective different modules at different times. The software may accordingly configure a hardware processor, for example, to constitute a particular module at one instance of time and to constitute a different module at a different instance of time.

Communication device (e.g., LTE) 900 may include a hardware processor 902 (e.g., a central processing unit (CPU), a graphics processing unit (GPU), a hardware processor core, or any combination thereof), a main memory 904, a static memory 906, and mass storage 907 (e.g., hard drive, tape drive, flash storage, or other block or storage devices), some or all of which may communicate with each other via an interlink (e.g., bus) 908.

The communication device 900 may further include a display device 910, an alphanumeric input device 912 (e.g., a keyboard), and a user interface (UI) navigation device 914 (e.g., a mouse). In an example, the display device 910, input device 912 and UI navigation device 914 may be a touchscreen display. The communication device 900 may additionally include a signal generation device 918 (e.g., a speaker), a network interface device 920, and one or more sensors 921, such as a global positioning system (GPS) sensor, compass, accelerometer, or another sensor. The communication device 900 may include an output controller 928, such as a serial (e.g., universal serial bus (USB), parallel, or other wired or wireless (e.g., infrared (IR), near field communication (NFC), etc.) connection to communicate or control one or more peripheral devices (e.g., a printer, card reader, etc.).

The storage device 907 may include a communication device-readable medium 922, on which is stored one or more sets of data structures or instructions 924 (e.g., software) embodying or utilized by any one or more of the techniques or functions described herein. In some aspects, registers of the processor 902, the main memory 904, the static memory 906, and/or the mass storage 907 may be, or include (completely or at least partially), the device-readable medium 922, on which is stored the one or more sets of data structures or instructions 924, embodying or utilized by any one or more of the techniques or functions described herein. In an example, one or any combination of the hardware processor 902, the main memory 904, the static memory 906, or the mass storage 916 may constitute the device-readable medium 922.

As used herein, the term "device-readable medium" is interchangeable with "computer-readable medium" or "machine-readable medium". While the communication device-readable medium 922 is illustrated as a single medium, the term "communication device-readable medium" may include a single medium or multiple media (e.g., a centralized or distributed database, and/or associated caches and servers) configured to store the one or more instructions 924. The term "communication device-readable medium" is inclusive of the terms "machine-readable medium" or "computer-readable medium", and may include any medium that is capable of storing, encoding, or carrying instructions (e.g., instructions 924) for execution by the communication device 900 and that cause the communication device 900 to perform any one or more of the techniques of the present disclosure, or that is capable of storing, encoding or carrying data structures used by or associated with such instructions. Non-limiting communication device-readable medium examples may include solid-state memories and optical and magnetic media. Specific examples of communication device-readable media may include: non-volatile memory, such as semiconductor memory devices (e.g., Electrically Programmable Read-Only Memory (EPROM), Electrically Erasable Programmable Read-Only Memory (EEPROM)) and flash memory devices; magnetic disks, such as internal hard disks and removable disks; magneto-optical disks; Random Access Memory (RAM); and CD-ROM and DVD-ROM disks. In some examples, communication device-readable media may include non-transitory communication device-readable media. In some examples, communication device-readable media may include communication device-readable media that is not a transitory propagating signal.

The instructions 924 may further be transmitted or received over a communications network 926 using a transmission medium via the network interface device 920 utilizing any one of a number of transfer protocols. In an example, the network interface device 920 may include one or more physical jacks (e.g., Ethernet, coaxial, or phone jacks) or one or more antennas to connect to the communications network 926. In an example, the network interface device 920 may include a plurality of antennas to wirelessly communicate using at least one of single-input-multiple-output (SIMO), MIMO, or multiple-input-single-output (MISO) techniques. In some examples, the network interface device 920 may wirelessly communicate using Multiple User MIMO techniques.

The term "transmission medium" shall be taken to include any intangible medium that is capable of storing, encoding or carrying instructions for execution by the communication device 900, and includes digital or analog communications signals or another intangible medium to facilitate communication of such software. In this regard, a transmission medium in the context of this disclosure is a device-readable medium.

Although an aspect has been described with reference to specific exemplary aspects, it will be evident that various modifications and changes may be made to these aspects without departing from the broader scope of the present disclosure. Accordingly, the specification and drawings are to be regarded in an illustrative rather than a restrictive sense. This Detailed Description, therefore, is not to be taken in a limiting sense, and the scope of various aspects is defined only by the appended claims, along with the full range of equivalents to which such claims are entitled.

### Example Embodiments

Example Embodiment 1 relates to an apparatus of a user equipment (UE), the apparatus comprising: processing circuitry, wherein to configure the LTE for a 2-step random access procedure with a base station, the processing circuitry is to: encode a first message for transmission to the base station, the first message including a random access preamble triggering the 2-step random access procedure and a payload, the payload comprising a medium access control (MAC) protocol data unit (PDU) with multiplexed MAC service data units (SDUs), and the MAC PDU including a cell radio network temporary identifier (C-RNTI) MAC control element (CE) identifying the UE; decode a second message received from the base station in response to the first message, the second message including a random access response (RAR) MAC PDU with an uplink grant; and encode uplink data for transmission to the base station based on the uplink grant; and memory coupled to the processing circuitry and configured to store the random access response MAC PDU.

Example Embodiment 2 relates to the apparatus of Example Embodiment 1, wherein the processing circuitry is to: encode the first message to include one or both of a radio resource control (RRC) message and a MAC control element (MAC CE) within the MAC PDU of the payload.

Example Embodiment 3 relates to the apparatus of Example Embodiment 2, wherein the RRC message is one of the following: an RRC system information (SI) request message, an RRC setup request message, an RRC resume request message, and an RRC reestablishment request message.

Example Embodiment 4 relates to the apparatus of Example Embodiment 2, wherein the RRC message is encoded as a common control channel (CCCH) SDU within the MAC PDU of the payload.

Example Embodiment 5 relates to the apparatus of Example Embodiment 1, wherein the multiplexed MAC SDUs comprise: a common control channel (CCCH) SDU;Example Embodiment a dedicated control channel (DCCH) SDU; andExample Embodiment a dedicated traffic channel (DTCH) SDU.

Example Embodiment 6 relates to the apparatus of Example Embodiment 1, wherein the processing circuitry is to: multiplex a buffer status report MAC control element (CE) and a power headroom report (PHR) MAC CE with the multiplexed MAC SDUs within the MAC PDU of the payload.

Example Embodiment 7 relates to the apparatus of Example Embodiment 1, wherein the processing circuitry is to: multiplex at least two of the C-RNTI MAC CE, a buffer status report MAC CE, and a power headroom report (PHR) MAC CE within the MAC PDU of the payload.

Example Embodiment 8 relates to the apparatus of Example Embodiment 1, wherein the processing circuitry is to encode the first message in response to a trigger event of the 2-step random access procedure, the trigger event including at least one of the following: an initial access from an RRC_Idle state, an RRC connection reestablishment, reception of a handover command, detection of a non-synchronized uplink synchronization status, a transition from RRC_Inactive state, and a beam failure recovery.

Example Embodiment 9 relates to the apparatus of Example Embodiment 1, wherein the RAR MAC PDU includes a MAC CE containing the uplink grant, an uplink timing advance value, a C-RNTI, and a random access preamble ID (RAPID) of the random access preamble in the first message.

Example Embodiment 10 relates to the apparatus of Example Embodiment 1, further comprising transceiver circuitry coupled to the processing circuitry; and, one or more antennas coupled to the transceiver circuitry.

Example Embodiment 11 relates to a computer-readable storage medium that stores instructions for execution by one or more processors of a base station, the instructions to configure the base station for a 2-step random access procedure with a user equipment (UE) in a wireless network, and to cause the base station to: decode a first message received from the UE, the first message including a random access preamble triggering the 2-step random access procedure and a payload, the payload comprising a medium access control (MAC) protocol data unit (PDU) with multiplexed MAC service data units (SDUs), and the MAC PDU including a cell radio network temporary identifier (C-RNTI) MAC control element (CE) identifying the LTE; encode a second message for transmission to the UE in response to the first message, the second message including a random access response (RAR) MAC PDU with an uplink grant; and decode uplink data received from the UE based on the uplink grant.

Example Embodiment 12 relates to the computer-readable storage medium of Example Embodiment 11, wherein the instructions further cause the base station to: multiplex a MAC RAR message with a MAC SDU with a downlink payload to generate the RAR MAC PDU in the second message.

Example Embodiment 13 relates to the computer-readable storage medium of Example Embodiment 12, wherein the MAC RAR message includes the uplink grant and an uplink timing advance value.

Example Embodiment 14 relates to the computer-readable storage medium of Example Embodiment 11, wherein the instructions further cause the base station to: multiplex a MAC CE with a MAC SDU with a downlink payload to generate the RAR MAC PDU in the second message.

Example Embodiment 15 relates to the computer-readable storage medium of Example Embodiment 14, wherein the MAC CE includes the uplink grant, an uplink timing advance value, a C-RNTI, and a random access preamble ID (RAPID) of the random access preamble in the first message.

Example Embodiment 16 relates to the computer-readable storage medium of Example Embodiment 14, wherein the MAC CE is multiplexed with one or more MAC SDUs with payload originating from a common control channel (CCCH) SDU, a dedicated control channel (DCCH) SDU, or a dedicated traffic channel (DTCH) SDU.

Example Embodiment 17 relates to the A computer-readable storage medium that stores instructions for execution by one or more processors of a user equipment (UE), the instructions to configure the LTE for a 2-step random access procedure with a base station, and to cause the UE to: encode a first message for transmission to the base station, the first message including a random access preamble triggering the 2-step random access procedure and a payload, the payload comprising a medium access control (MAC) protocol data unit (PDU) with multiplexed MAC service data units (SDUs), and the MAC PDU including a cell radio network temporary identifier (C-RNTI) MAC control element (CE) identifying the UE; decode a second message received from the base station in response to the first message, the second message including a random access response (RAR) MAC PDU with an uplink grant; and encode uplink data for transmission to the base station based on the uplink grant.

Example Embodiment 18 relates to the computer-readable storage medium of Example Embodiment 17, wherein the instructions further cause the UE to: encode the first message to include a radio resource control (RRC) message and a MAC CE within the MAC PDU of the payload.

Example Embodiment 19 relates to the computer-readable storage medium of Example Embodiment 18, wherein the RRC message is one of the following: an RRC system information (SI) request message, an RRC setup request message, an RRC resume request message, and an RRC reestablishment request message; and wherein the RRC message is encoded as a common control channel (CCCH) SDU within the MAC PDU of the payload.

Example Embodiment 20 relates to the computer-readable storage medium of Example Embodiment 17, wherein the instructions further cause the UE to: multiplex a buffer status report MAC control element (CE) and a power headroom report (PHR) MAC CE with the multiplexed MAC SDUs within the MAC PDU of the payload.

## Claims

1. A method for a 2-step contention-based random access, CBRA, procedure with a next generation Node-B (gNB) in a 5G-New Radio (NR) communication network, comprising providing a medium access control (MAC) control element (CE) format and MAC protocol data unit (PDU) structure for MsgA and MsgB

2. The method of claim 1, where a cell radio network temporary identity (C-RNTI) MAC CE is multiplexed to form the MAC PDU for MsgA.

3. The method of claim 1 or 2, where a MAC service data unit (SDU) containing a common control channel/dedicated control channel/dedicated traffic channel (CCCH/DCCH/DTCH) message and/or buffer status report (BSR) MAC CE is multiplexed to form the MAC PDU for Msg A.

4. The method of one of claims 1 to 3, where a MAC random access response (RAR), wherein the MAC RAR includes the C-RNTI and UL Timing Advance value.

5. The method of one of claims 1 to 3, wherein the MAC RAR includes one or more of a random access preamble identifier (RAPID), uplink (UL) grant, and C-RNTI and UL Timing Advance value, is multiplexed with one or more MAC SDUs of a UE with each SDU containing payload originating from CCCH SDU or DCCH SDU or DTCH SDU in MsgB.

6. The method of one of claims 1 to 5, where a MAC CE, wherein the MAC CE includes a UL grant, UL Timing Advance value, C-RNTI and RAPID, is multiplexed with one or more MAC SDUs of a UE with each SDU to include payload originating from CCCH SDU or DCCH SDU or DTCH SDU in MsgB.

7. The method of one of claims 1 to 6, where a MAC RAR, wherein the MAC RAR includes a LTL grant, LTL Timing Advance value, C-RNTI, RAPID, and a DL assignment for the ContentionResolutionldentifier MAC CE and DL payload, is to form a RAR MAC PDU in MsgB.

8. The method of claim 7, where a 1 or more of the MAC RARs are multiplexed to form a RAR MAC PDU in MsgB.

9. The method of claim 7 or 8, where the downlink (DL) assignment provides the radio resources for the DL payload which may contain the ContentionResolutionldentifier MAC CE and DL payload of each of the UE are sent separately in another MAC PDU in MsgB.

10. An apparatus comprising one or more processors and one or more computer-readable media comprising instructions that, when executed by the one or more processors, cause the one or more processors to perform the method of any of claims 1 to 9.
